# EUROPEAN PATENT SPECIFICATION

(11) **EP 3 152 463 B1**
(45) Date of publication and mention of the grant of the patent: **03.10.2018**
(21) Application number: 15736003.3
(22) Date of filing: 05.06.2015
(51) Int. Cl.: F16H 15/10, F16H 15/12

(54) **GEARBOXES**
GETRIEBE
BOÎTES DE VITESSES

(30) Priority: 06.06.2014 GB 201410192; 29.10.2014 GB 201419245
(43) Date of publication of application: 12.04.2017
(73) Proprietor: Transfiniti Limited, Preston, Lancashire PR2 5SL (GB)
(72) Inventor: MCMANAMON, David, Preston Lancashire PR25 5SL (GB)
(74) Representative: Hutchinson, Thomas Owen
(86) International application number: PCT/GB2015/051657
(87) International publication number: WO 2015/185948

(56) References cited:
- FR-E- 25 588
- JP-A- H09 229 156
- JP-A- 2003 254 400
- JP-U- S54 150 773
- SU-A1- 1 587 276
- US-A- 923 472

## Description

This invention relates to gearboxes.

Gearboxes are an often-essential part of a drivetrain system and generally comprise number of intermeshing gear sets that can be selectively coupled to an input and an output shaft to obtain a desired gear ratio. Manual and automatic gearboxes having a fixed number of user-selectable gear ratios have been in existence for very many years. Gearboxes also exist that offer infinite gear ratio selections via the use of a variator in place of, or in addition to, conventional gear sets.

Many different types of variator are known, such as conical pulley belt systems whereby a drive belt can be positioned at different axial positions on a pair of conical rollers to effectively vary the radius of input pulley and the output pulley where they engage the drive belt. By sliding the belt axially relative to the pulleys, the gear ratio can be infinitely adjusted between upper and lower limits. Another known type of variator sees a drive belt engaging a pair of tapered discs such that by adjusting the separation of the discs, the belt is able to engage a portion of the tapered discs at different radii thus adjusting the gear ratio. A further known type of variator is the toroidal cavity type variator, which has a roller that runs within a toroidal cavity formed by semi-toroidal grooves in a pair of opposing discs: by canting the roller, it contacts the discs at different radial positions, thus leading to potentially infinite variation in gear ratio between upper and lower limits.

Variators offer one distinct advantage over conventional gearboxes, namely that, in principle, any desired gear ratio falling between upper and lower limits can be selected. With modern computer control, this nowadays offers the possibility of precisely matching the torque demand at the output with the available torque at the input to improve the efficiency or power of the drivetrain, as required. Further, certain types of variator are able to provide infinite gear reductions, that is to say, a "geared neutral" position whereby any input shaft velocity results in a zero-output shaft velocity, or vice-versa.

All known variators transmit power via frictional contact between their various parts (belts and pulleys, discs and rollers etc.) and this gives rise to known variators' main disadvantage: a relatively low torque transmission capability for a given size/weight of variator compared with a conventional gearbox. The root of this problem is friction in the gearbox which can increased by increasing the compression force applied between frictionally engaging parts. This results in an engineering trade-off situation whereby: on the one hand, the power throughput can be increased by increasing the friction forces (e.g. belt tensions, clamping forces etc.) which in turn increases the drag and wear rate of the gearbox; and, on the other hand, reducing the friction forces to reduce wear rates and drag, which reduces the maximum power throughput that can be obtained before slippage occurs.

One partial solution to this problem is exemplified in the type of gearbox that uses epicyclical gearing to "sum" the speeds and/or torques of relatively moving sun and annular gears and a planet gear carrier ring. In this type of gearbox, a variator operatively interconnected between any two of the sun, annulus or planet carrier can be can be used to adjust the relative speed of any one other of the sun, annulus or planet carrier to provide a summed output at the third of these. By such means, the primary torque of the drivetrain can be transmitted through the epicyclical gearing with the variator being used simply to adjust the summing or mixing of the gear speeds. This reduces the load transmitted through the variator, but results in a bulky and complicated gearbox, which can sometimes be fault intolerant.

FR25588 and US923472 each disclose a gearbox which, in the opinion of the examining division of the European Patent Office, falls within the wording of the pre-characterizing portion of claim 1.

A need therefore exists for an improved and/or alternative type of gearbox and/or a gearbox that addresses and/or overcomes one or more of the above problems and/or one or more of the shortcomings associated with known gearboxes.

This need is satisfied by the invention, i.e. by a gearbox according to independent claim 1. Dependent claims 2-15 concern particular embodiments of the invention.

A gearbox according to claim 1 comprising: an input shaft comprising a driving roller; an output shaft comprising a driven roller; and a pair of variator discs mounted for engagement with opposite sides of the driving and driven rollers; wherein either or both of the input and output shafts are mounted for displacement along a radius of the variator discs and wherein the variator discs comprise a circular groove on either side for receiving a set of ball bearings.

Suitably, such a configuration means that by axially displacing the input and/or output shafts, the point of contact between the driving and/or driven rollers can be moved to different radial positions relative to the variator discs, thereby adjusting the relative speeds of the input and output shafts.

In the context of the invention, displacement along a radius of the variator discs means moving the driving and/or driven rollers along a line segment that joins the centre of the variator discs with any point on their circumference. Thus, by axially displacing the driving and/or driven rollers, they can be made to contact the variator discs at different distances from the variator discs' centres thereby changing the gear ratio of the gearbox, that is to say, the velocity of the input shaft relative to the velocity of the output shaft.

An embodiment of the invention therefore provides an infinitely variable transmission (IVT) that can seamlessly and continuously vary the speed ratio between an input and output from zero speed to full speed, and provide variable speed reverse and zero speed with the output shaft held detent regardless of the input speed. The system output can also be fully disengaged from the input all within the same mechanism. The invention may also dispense with the traditional gearbox clutch, torque converter and potentially the rear axle or differential (as shall be described below).

In an embodiment, the invention operates on the principle of a shaft driven dome surface running within a groove on the extremes of rotating discs providing the drive input, with the output being derived from a secondary laterally adjustable 'crowned' output shaft which can be infinitely positioned by a mechanical, electrical or hydraulic actuator along the inline axis of the rotating discs. The input dome that runs within the grooved discs is suitably of a larger diameter to the output element so that a 1:1 ratio can be achieved between the input and output speeds as the output element at its maximum extent runs on a smaller diameter on the rotating discs than the input element. The difference in diameter also makes it possible to fully disengage the output element by positioning its drive surface over the groove on the rotating discs.

Additionally the rotating discs, input and output shafts can be arranged in series or 'ganged' together to increase the torque capabilities of the transmission, which may include the addition of gearing on both the input and output elements of the system. These gears may unify the torque within the system, for the transmission to 'slip' or lose traction on the friction driven faces all contact points would have to slip simultaneously. This is an advantage over other friction-based IVTs which can 'slip' when any section loses friction driven traction. Any number of rotating discs, input / output elements and gearing can be added in replicated sections to increase the torque capabilities and hence the friction driven contact points of the transmission making it capable of handling much higher torque than existing friction based IVT's or CVT's.

In an embodiment of the invention, the transmission has the inherent capability to accept multiple drive inputs, i.e.: from an Internal combustion engine or an electric motor and is also capable of multiple outputs, for example the transmission can be used in place of an axle or differential and can provide varying output speeds from a common input speed to either the left or right wheel, especially advantageous when the vehicle is cornering or operating in limited traction conditions such as snow because both wheels can be positively driven. This may also have a positive benefit for the handling as the rear wheels can be independently controlled to improve the dynamic handling of a vehicle, in conjunction with the electronic monitoring the steering wheel, accelerator, brake, speed, lateral forces, yaw and other vehicle parameters.

Operating characteristics of a transmission/gearbox in accordance with the invention may include any one or more of:
Infinitely variable speed in both forward and reverse;
Zero speed position is naturally detent and does not allow output rotation, i.e.: the vehicle will not roll when on an incline. Furthermore, a small dimple can be provided at the centre of the drive disc to provide a free neutral;
A traditional clutch or torque converter is not necessarily required;
The system can be arranged as a series of discs increasing the number of contact points, this is further enhanced by gearing each rotating section together which unifies the torque of the entire system meaning all contact points would have to 'slip' simultaneously for the transmission to fail. Furthermore, the increase in the number of contact points can mean a lower 'axial' load can be applied to the system's driving surfaces thus reducing heat build-up at the contact points and reducing the possibility of spalling or cracking of the rolling element contact surfaces, meaning less wear and increased durability;
Multiple Inputs are easily achievable i.e. for the input from either an internal combustion engine or an electric motor. Also, full engine speed outputs are available on the input side of the gearbox for such things as a Power Take off (PTO);
Multiple variable speed outputs are easily achievable, so the system can easily be adapted to act as both, the vehicle transmission and the rear differential / transaxle. The major advantages of this are that each wheel can be electronically speed controlled and positively / negatively driven in all dynamic conditions. This is a major advantage over current differentials most of which generally struggle to drive one wheel when the opposite wheel loses traction. It may also have the capability to dramatically improve the vehicle handling especially for e.g. during cornering, as the inner wheel can be speed-reduced and the outer wheel speed-increased to account for the varying distance in the track experienced. In low-traction situations such as snow / ice and other hazardous driving conditions both wheels can be positively driven, thus improving vehicle traction. Any or all of these features can be electronically controlled though sensors presently existing on most modern vehicles on such as steering, accelerator, brake, yaw, lateral 'g' etc. sensors. Furthermore, in certain applications the transmission is easily capable of providing forward motion on one output whilst providing reverse motion on the other, so that a vehicle could turn within its own footprint, as is often advantageous in tracked and agricultural vehicles;
The transmission may have a high commonality and a fewer components meaning reduced production costs and potentially greater reliability as compared to modern day automatic transmissions;
The system may naturally adjust for any wear in the contact elements;
Rear 'wheel hop' can be eliminated at the rear axle, as well as the chance of power down 'spin out' reduced;
Controlled speed for ascend and descend creep;
Low revs at cruising speed, leading to optimal engine use, reduced engine wear and at maybe even ^{∼} 20% fuel savings, along with increased vehicle performance;
Controlled braking is possible on each wheel, and can possibly dispense with the ABS braking system;
The adjustment carriage assembly can be spring-loaded to the zero speed point upon the disc and hydraulically actuated by a gear pump driven on the speed input side of the gearbox, by controlling the pressure to the actuator automatic control of the variator can occur on increased speed at the input end, thus as the input engine increases speed the gearbox will increase in ratio. This could apply to lower sophistication vehicles.

In one embodiment, the gearbox may comprise more than one input shaft and/or more than one output shaft. According to the invention, the driving and driven rollers are engaged on opposite sides by the variator discs, such that a sandwich structure is formed with each driving and/or driven roller being interposed between a respective pair of variator discs. Such an arrangement may overcome one of the shortcomings of existing variators by increasing the number of points of contact between the rollers and the variator discs, which in turn may reduce the clamping force required to obtain a given power throughput.

Suitably, therefore, the gearbox comprises a plurality of input shafts (ni), in which case, the number of variator discs (nv) may be one more than the number (ni) of input shafts: nv = ni + 1. Additionally or alternatively, the gearbox may comprises a plurality of output shafts (no), in which case, the number of variator discs (nv) is suitably one more than the number (no) of output shafts: nv = no + 1.

Suitably, the number of input shafts (ni) is equal to the number of output shafts (no). Such a configuration can be advantageous because it balances the loading of the variator discs. In other words, by having the same number of input shafts and output shafts (ni = no), the number of variator discs (nv) is more easily selected and the likelihood of the variator discs becoming canted relative to the driving or driven rollers may be reduced.

Suitably, the number of input shafts (ni) and the number of output shafts (no) is an odd number.

Where a plurality of input shafts and output shafts are employed, they may be organised into groups of input and output shafts: the shafts of each group being geared to an adjacent shaft of the group at a 1:-1 ratio.

Where groups of input and/or output shafts are used they may be axially displaced in unison. This may be accomplished by coupling the shafts of a group together and by moving the group as a unit.

The input shaft(s) and output shaft(s) may be coaxial, or their axes may lie in a common plane. However, this is not a necessarily condition for the operation of the gearbox.

In an embodiment of the invention, there may be a single master input shaft, which may be operatively connected (e.g. geared) to one or more additional input shafts. Likewise, in certain embodiments of the invention, there may be a single master output shaft, which may be operatively connected (e.g. geared) to one or more additional output shafts. Further, in certain embodiments of the invention, there may be a plurality of master output shafts, which may each be operatively connected (e.g. geared) to a respective one or more additional output shafts. In other words, a gearbox in accordance with the invention may comprise a single master input shaft and a plurality of master output shafts, or a plurality of master input shafts and a single master output shaft.

It will be appreciated that a gearbox according to the invention may be connected at its input to a power source, such as an internal combustion engine or an electric motor, and at its output, to two or more outputs, which outputs, say, in an automotive application, could be operatively connected to driving wheels of a vehicle. However, since the ratio of each of the outputs relative to the input can be adjusted independently, it is possible, using the invention, to provide a differential output. In automotive applications, this can be seen to have major technical advantages compared with a conventional gearbox having a single output that is connected to separate driving wheels via a "differential" gear set. Differentials (which, for example, allow the driving wheels of a vehicle rotate at different speeds) are essentially torque matching devices, which means that if the torque at one wheel drops to zero (e.g. in a "wheel spin" situation), the torque at the other wheel also reduces to zero, resulting in a loss of drive to the wheels. This can be ameliorated by the use of "limited slip" differentials, but in any event, a conventional differential is essentially a "one wheel drive" arrangement. In contrast, the invention provides the means to obtain a differential output, whilst at the same time providing positive drive at each of the driven wheels. This means that both driven wheels can be actively driven regardless of their relative speeds (which improves the handling of a vehicle and which may reduce body roll as the slower wheel is positively driven) and avoids the problem of reduced, or zero, power output when one of the wheels begins to slip.

Various embodiments of the invention shall now be described, by way of example only, with reference to the accompanying drawings in which:
Figures 1 to 4 do not show the features of the pre-characterizing portion of claim 1 but are schematic plan views of a single input-single output gearbox set to different gear ratios (i.e. forward, reducing, geared neutral and reverse, respectively);
Figure 5 does not show the features of the pre-characterizing portion of claim 1 but is a schematic plan view of a gearbox having a single input and dual output;
Figure 6 is schematic side view of a partial variator disc arrangement for a gearbox in accordance with the invention;
Figure 7 is a schematic plan view of Figure 6;
Figure 8 shows a drivetrain system comprising an input motor operatively connected to a gearbox 104 in accordance with the invention;
Figure 9 is a view from below of a gearbox, comprising a variator assembly and the output shaft assembly;
Figure 10 shows the same arrangement as that shown in Figure 9, albeit with the ball bearings and cages omitted;
Figures 11, 12 and 13 are further views of the gearbox shown in Figures 9 and 10; and
Figure 14 does not show the features of the pre-characterizing portion of claim 1 but is a schematic view of a gearbox comprising a single, driven input shaft and a pair of output shafts independently connected to driving wheels of a vehicle.

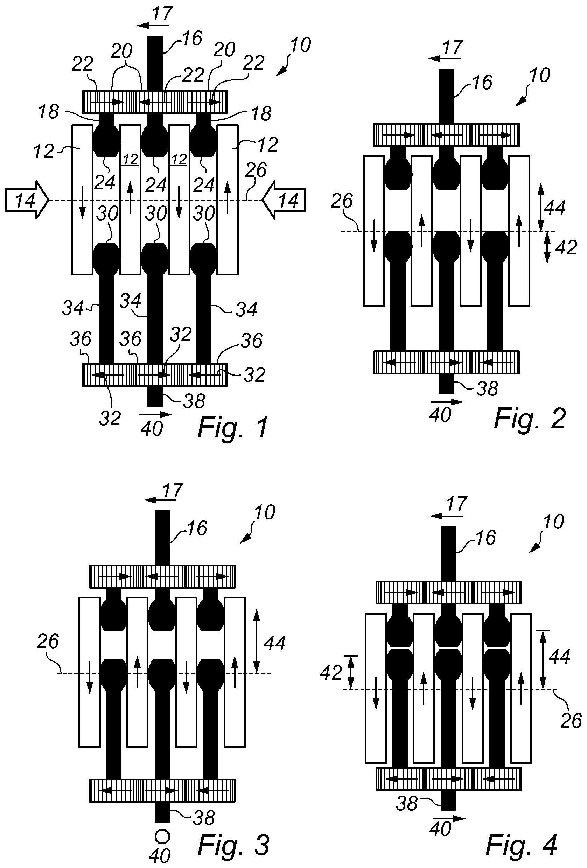

Referring to Figures 1 to 4 of the drawings, a gearbox 10 in accordance with the invention comprises a set of four coaxial, spaced-apart variator discs 12 that are pressed-together 14 by a sprung mechanism (not shown for clarity).

A master input shaft 16 is rotated in a direction 17 by a motor (not shown) and is geared in a 1:-1 ratio to a pair of supplementary input shafts 18 using gears 20 such that the direction of rotation of the shafts alternate, as indicated by arrows 22. The input shafts 16, 18 each terminate in a roller 24 that engages a variator disc 12 on either side.

The variator discs 12 are mounted so that they are free to rotate about a common axis 26. The rotation of the rollers 24 in alternating directions causes the variator discs 12 to rotate in alternating directions also, as indicated by arrows 28.

A further set of output rollers 30 are interposed between, and frictionally engage, the variator discs 12 and are caused to rotate in alternating directions, as indicated by arrows 32 by their frictional interaction with the variator discs 12. The output rollers 30 are mounted on respective output shafts 34 that are geared 36 together in a 1:-1 ratio in the same manner as the input shafts 16, 18. One of the output shafts 34 extends beyond the gearing 36 to form a master output shaft 38 that rotates in a direction indicated by arrow 40.

It will be noted from Figure 1, that the input rollers 24 and the output rollers 30 contact the variator discs 12 at approximately the same radial distances from the axis of rotation 26 of the variator discs. Given that the input 24 and output 30 rollers are of the same diameter, the gear ratio of the gearbox 10 is approximately 1:-1, as shown by comparing the direction and size of arrows 17 and 40.

The output shafts 34 are mounted for axial displacement relative to the variator discs 12 along a radius of the variator discs 12 (i.e. along a line whereby the locus of the points of contact of the rollers 34 with the discs 12 intersects the axis 26).

In Figure 2, it can be seen how the output shafts 34 have been moved towards the variator disc axis 26, which results in the output rollers 30 contacting the variator discs 12 at a distance 42 from the axis 26 which is smaller than the distance 44 between the axis 26 and the point of contact of the input rollers 24 with the variator discs 12. This results in a reduction of the gear ratio, as shown (schematically, and not to scale) by comparing the input arrow 17 with the output arrow 40.

In Figure 3, the output rollers 34 have been axially displaced such that their points of contact with the variator discs 12 are aligned with the variator discs' axis of rotation. This results in a "geared neutral" condition, whereby any rotational speed of the input shaft 17 is converted into a zero-speed output at the master output shaft 38.

Turning now to Figure 4, the output shafts 34 have been axially displaced beyond the variator discs' centres 26 such that both the input rollers 24 and the output rollers frictionally engage the same "side" of the variator discs 12. This results in a reversal of the direction of the master output shaft 38 compared with the previous three Figures. This represents a "reverse gear ratio" with the gear ratio being a function of the relationship between the distances 42 & 44 previously described.

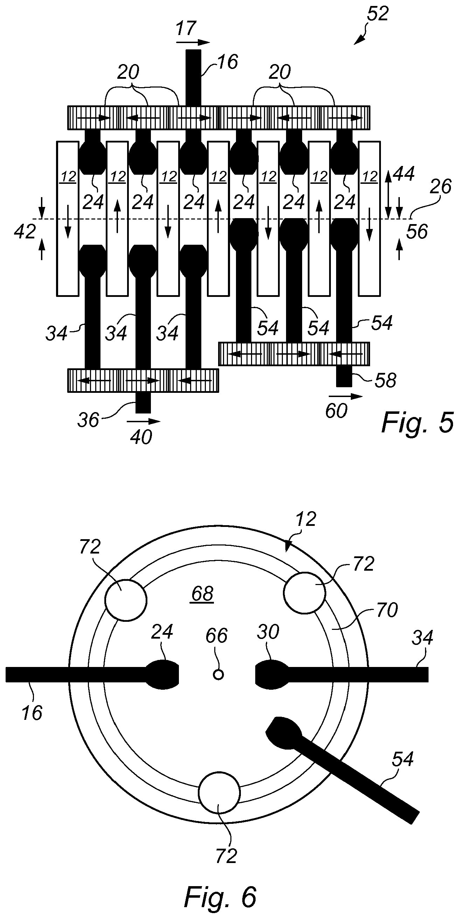

Figure 5 illustrates, schematically, a more complex version 52 of the gearbox 10 described above: comprising a single master input shaft 16, but a pair of master output shafts 38, 50. The arrangement and principle of operation of the gearbox 52. In this example, there are two sets of three output shafts 34, 54, which are geared by gears 36 in a 1:-1 ratio as previously described. Each set of output shafts is arranged for axial displacement relative to the variator discs 12, to move in unison such that the distances 42, 56 between the points of contact of the output rollers 30, 58 can be adjusted independently, resulting in different output speeds at the two master output shafts 36, 50, as indicated by arrows 40 and 60.

The gearbox 52 of Figure 5 is particularly suited for use in a trans-axle drive system whereby drive wheels (not shown) can be connected to each of the output shafts 36, 58 to obtain different wheel speeds for each wheel. In such a situation, a mechanical actuator could be coupled, for example, to the steering wheel of the vehicle, which mechanical actuator is configured to "mix" the ratios of the output shafts 36, 56 in proportion to the steering angle. Additionally or alternatively, this could be accomplished by using an encoder on the steering column and by using computer controlled actuators to axially displace the output shafts 34, 54 to obtain appropriate wheel speeds matched to different cornering conditions.

Turning now to Figure 6 of the drawings, the gearbox 10 is partially shown in side view looking along the direction of axis 26. It can be seen from Figure 6 that the variator discs 12 comprise a circular groove 70 on either side in which a set of ball bearings 72 roll to maintain a fixed axial separation of the variator discs 12. The ball bearings 72 are mounted in a cage (not shown), but it can be seen how the input shaft 18 and the output shaft 24 are coaxial and arranged along a line intersecting the centre of the variator disc 12.

Also shown in Figure 6 is a secondary output shaft 54, which is arranged at an angle to the other output shaft 34, but which is nevertheless mounted for axial displacement along a line intersecting the centre of the variator disc 12. This configuration enables the number of output shafts to be increased (there could, of course, be more than two output shafts) without increasing the number of variator discs. Provided interference between the output shafts can be avoided, in principle, the gearbox 10 could have any number of output shafts, each having a different gear ratio.

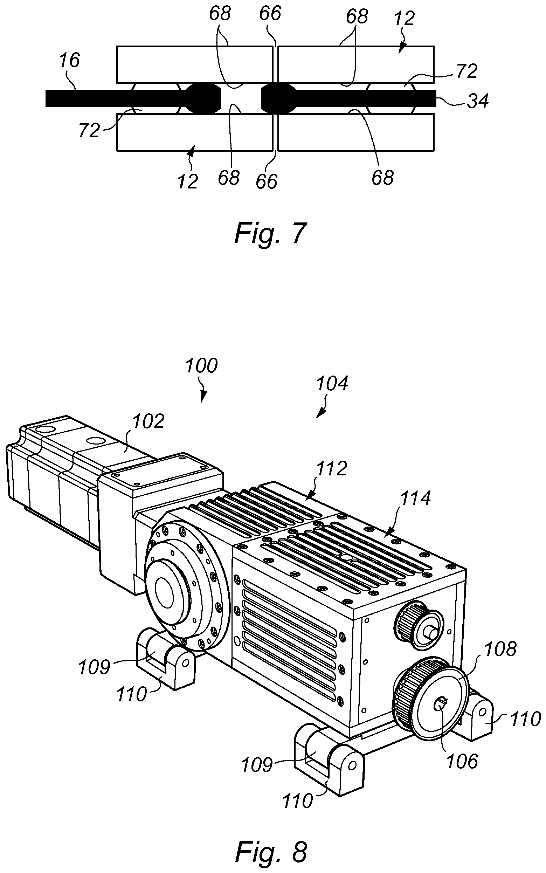

In Figure 7 of the drawings, the gearbox is set to a "geared neutral" position (as described in relation to Figure 3 above), and it will be noted (as in all of the drawings) that the input rollers 24 and the output rollers 30 are crowned such that there is point contact between each roller 24, 30 and the variator discs 12. At a geared neutral position, the roller located at the centre of the variator disc will no longer "roll" over the surface of the disc 12, but may instead "slide", which could lead to premature wear of the gearbox. To overcome this issue, a small through hole 66 is provided at the geometric centre of each of the variator discs 12, which, as can be seen in Figure 7 in particular, causes the crown of the driven roller 30 to temporarily disengage the variator disc 12. In practice, the hole 66 serves two main purposes: 1) it *ensures* that there is no drive output when the driven roller 30 is moved to the "geared neutral" position, i.e. in-line with the variator discs' 12 axis 26, because the contact with between the roller 30 and the disc 12 is effectively broken at that point. This is generally a good idea as it provides a double fail-safe whereby a very slight misalignment of the driven roller 30 away from the disc's centre 26 could cause the drive to "re-engage" and by providing even a small hole 66, movement of a certain finite amount is necessary to re-engage the drive; and 2) the hole serves to facilitate the movement of traction fluid within the gearbox, which is generally a good idea from an engineering and reliability perspective.

Although not shown in the drawings, the through hole 66 is slightly bevelled where it meets the faces 68 of the variator disc 12 and this usefully provides a smooth transition from the engaged to the disengaged states, and vice-versa.

An embodiment of an actual gearbox in accordance with the invention is shown in Figures 8, 9 and 10 of the drawings. In Figure 8, a drivetrain system 100 comprises an input motor 102 operatively connected to a gearbox 104 in accordance with the invention. An output shaft 106 having an output drive pulley 108 is shown, although it will be appreciated that the output shaft could be connected to anything.

The gearbox 104 is mounted on a set of vibration-dampening feet 109, which engage, via rubber grommets (not visible) with support clevises 110 of, say, a vehicle or machine (not shown).

The gearbox 104 comprises a main housing 112 providing a fluid-tight enclosure for the variator (not visible in Figure 8), which contains a quantity of traction fluid. The variator is connected to an output shaft assembly unit 114, as shall be described below.

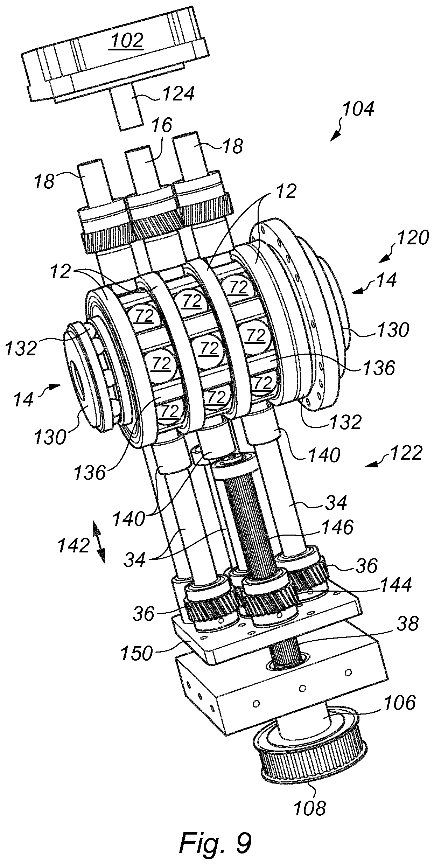

Figure 9 is a view from below of the gearbox 104, comprising the variator assembly 120 and the output shaft assembly 122, where, of course, the main housing 112 and output shaft assembly housing 114 have been removed to reveal the internal workings of the gearbox 104.

The output shaft 124 of the motor is connected to a master input shaft 16 via a coupling, which, in Figure 9 has been removed for clarity. The master input shaft 16 is geared in a 1:-1 ratio to a pair of further input shafts 18 located on either side of it, via gears 22. The input shafts 16, 18 each carry at their free ends, a drive roller 24, which are sandwiched between a set of four, co-axial variator discs 12. The variator discs 12 are clamped together by a spring clamping assembly 130 which exerts an axial compression force 14 to the variator discs 12 via thrust bearings 132 and such an arrangement keeps the variator discs 12 in contact with the drive rollers 24 at all times. The compression force 14, and thus the friction between the driving 24 and driven 30 rollers and the variator discs 12 can be adjusted by adjustment of the compression force 14.

The variator discs 12 are separated by ball bearings 72, which are mounted in cages 136. The ball bearings 72, as described previously, roll in grooves 70 in the faces 68 of the variator discs 12.

The gearbox 104 additionally comprises a set of three output shafts 34, which are coaxial respectively with the input shafts 16, 18. Each of the output shafts 34 carry at their free ends, a driven roller 30, which frictionally engages, on opposite sides, the faces 68 of adjacent variator discs 12.

The output shafts 34 are mounted for axial displacement in slide bearings 140 enabling them to be axially displaced, as shown by arrow 142, to displace the contact point of the driven rollers 30 relative to the radius of the variator discs 12, as previously described, thereby changing the ratio of the gearbox, i.e. the velocity of the input shafts 16, 18 relative to that of the output shafts 34.

The output shafts 34 are geared 36 to one another in a 1:-1 gearing relationship so that they rotate in unison, as previously described.

The middle one of the gears 36 is arranged to mesh with a take-off gear 144 which is slidingly mounted on a spline shaft 146, forming the master output shaft 38 of the gearbox 104 and thence to the pulley 108, as described above.

The output shafts 34 of the output shaft assembly 122 are displaced by an actuator acting upon a plate 150. The actuator can be a servo connected to a worm screw, a lever, a cam or any other suitable arrangement. It will be appreciated that in many applications, the axial displacement of the output shafts 34 will be computer-controlled and optionally matched to the input torque and the torque demand at the output.

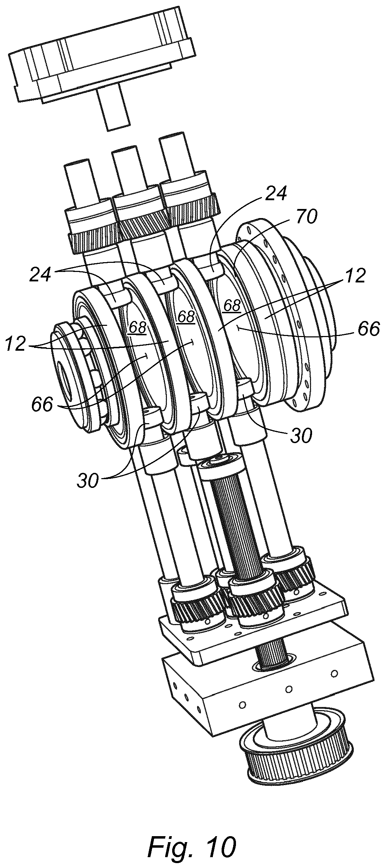

In Figure 10 of the drawings, the same arrangement as that shown in Figure 9 is depicted, albeit with the ball bearings 72 and cages 136 omitted so that the interaction of the driving rollers 24 and the driven rollers 30 with their respective faces 68 of the variator discs 12 can be more easily seen. Also visible in Figure 10 are the grooves 70 in the faces 68 of the variator discs 12, as well as the central through holes 66.

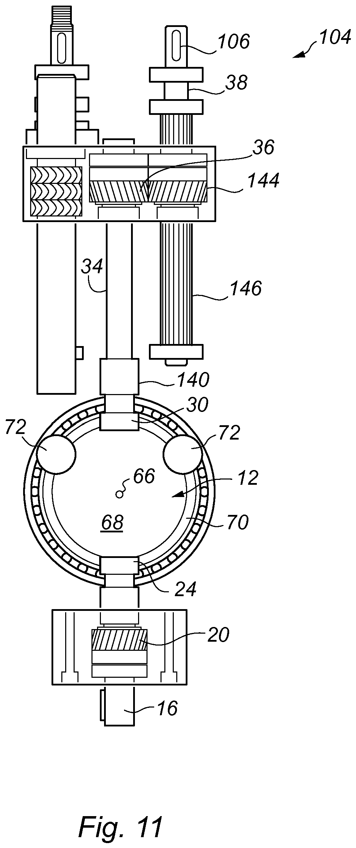

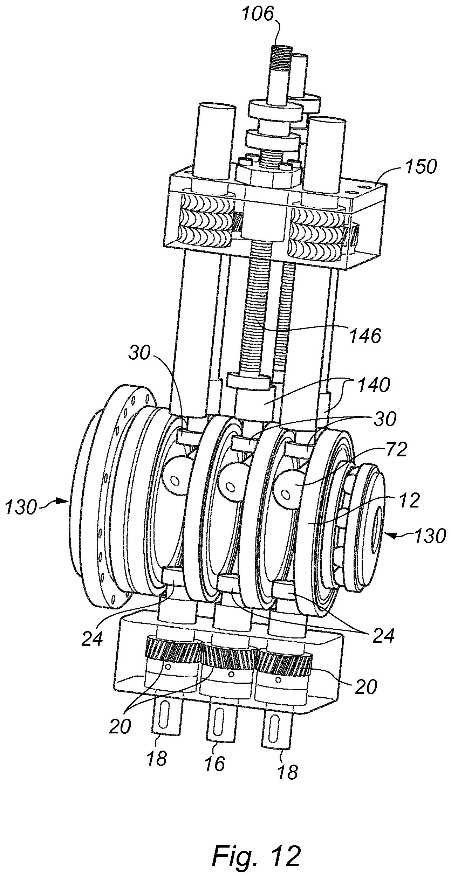

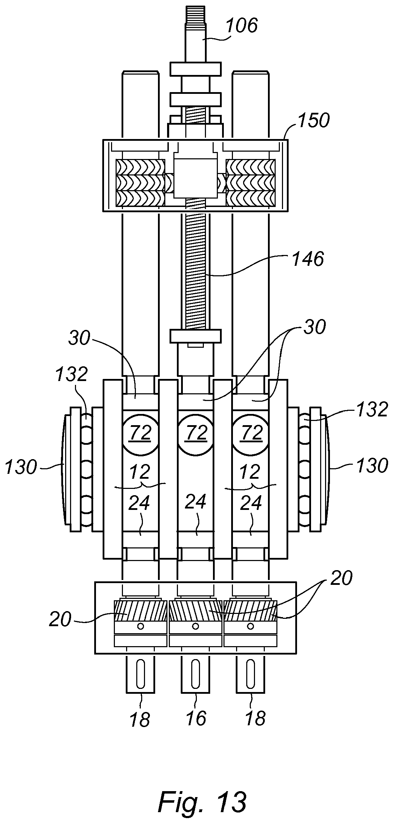

Figures 11, 12 and 13 are further views of the gearbox shown in Figures 9 and 10.

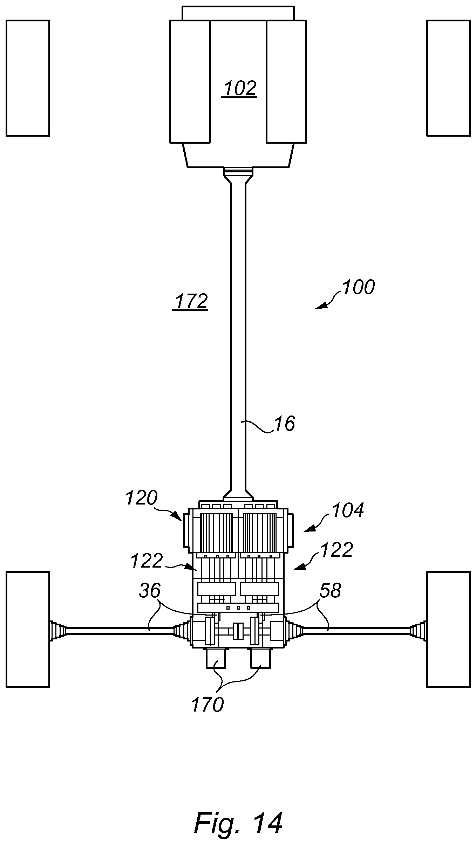

Figure 14 does not show the features of the pre-characterizing portion of claim 1 but is a schematic view of a gearbox comprising a single, driven input shaft 16 and a pair of output shafts 36, 58 independently connected to driving wheels of a vehicle. The gear ratios of the input 16 to each of the output shafts 36, 58 is computer controlled via actuators 170 connected to a control system of the vehicle 172 with various sensors used to calculate the appropriate ratios with reference to the engine throttle position setting (torque demand input of a driver), steering angle sensors, wheel slip sensors, body roll sensors, acceleration (g-force) sensors, inclination sensors, etc.. Statement 1.

The skilled person will readily appreciate that the illustrated embodiments are merely exemplary of the invention, and that various changes or modifications could be made without departing from the scope of the invention as defined by the appended claims. For example, it will be appreciated that the design shown in Figures 9 and 10 could be adapted to comprise two output shaft assemblies 122 arranged at different instances to the variator discs 12, for example, as shown only schematically in Figure 6 of the drawings. Also, the number of shafts and variator discs could be varied, for example by adding more shafts and discs to the configuration shown in Figures 9 and 10 in particular to obtain a gearbox with multiple, independent outputs, such as that shown schematically in Figure 5.

Further embodiments of the invention may comprise multiple inputs and multiple outputs, or multiple inputs connected to a single output. Such configurations may be useful, for example, in hybrid vehicles comprising an internal combustion engine and an electric motor, which can be selectively engaged with the drivetrain via a gearbox in accordance with the invention. Further, the gearbox may be connected to a regenerative braking system, such as an electric generator t one of its outputs, or an electric motor connected to an input could be operated "in reverse" as a generator.

## Claims

1. A gearbox comprising (10): an input shaft (16) comprising a driving roller (24); an output shaft (38) comprising a driven roller (30); and a pair of variator discs (12) mounted for engagement with opposite sides of the driving (24) and driven (30) rollers; wherein either or both of the input (10) and output (38) shafts are mounted for displacement along a radius of the variator discs (12); **characterised in that** the variator discs (12) comprise a circular groove (70) on either side for receiving a set of ball bearings (72).

2. The gearbox (10) of claim 1, in which axial displacement of the input (10) and/or output (38) shafts moves points of contact between the driving (24) and/or driven (30) rollers and the variator discs (12) to different radial positions relative to the variator discs (12).

3. The gearbox (10) of claim 1 or claim 2, wherein displacement along the said radius of the variator discs (12) comprises moving the driving (24) and/or driven (30) rollers along a line segment that joins the centre of the variator discs (12) with any point on their circumference.

4. The gearbox (10) of any preceding claim, comprising more than one input shaft (16,18) and/or more than one output shaft (34).

5. The gearbox (10) of any preceding claim, wherein the number of input (16,18) or output (34) shafts is an odd number.

6. The gearbox (10) of claim 4 or claim 5, wherein the plurality of input (16,18) and/or output (34) shafts are grouped and wherein the shafts of each group are geared to an adjacent shaft of the group at a 1:-1 ratio.

7. The gearbox of claim 6, wherein the groups of input and/or output shafts arranged for axial displacement in unison.

8. The gearbox (10) of any of claims 4 to 7, comprising a master input or output (38) shaft (16) geared (20, 36) to one or more additional input (18) or output (34) shafts, respectively.

9. The gearbox (10) of any preceding claim, further comprising means (14) for biasing the variator discs (12) into contact with the input (24) and output (30) rollers, optionally the means for biasing (14) comprising a spring.

10. The gearbox (10) of any preceding claim, wherein either or both of the input (24) and output (30) rollers are axially displaceable to a positon in which points of contact between the rollers (24, 30) and the variator discs (12) substantially align with the centre of the variator discs (12) and optionally wherein the or each variator disc (12) comprises an indentation or through aperture (66) at its centre, the indention or through aperture (66) optionally comprising a bevelled or chamfered edge providing a smooth transition between the indention or through aperture (66) and the face (68) of the variator disc (12).

11. The gearbox (10) of any preceding claim, wherein either or both of the input (24) and output (30) rollers are axially displaceable to positons in which the point of contact between the respective rollers (24, 30) and the variator discs (12) are located on the same side of the centre of the variator discs (12).

12. The gearbox (10) of any preceding claim, comprising a housing (112) forming a fluid-tight enclosure for the variator, the housing (112) containing a quantity of traction fluid.

13. The gearbox (10) of any preceding claim, comprising a take-off gear (144) geared to one of the output shafts (34), the take off-gear (144) being slidingly mounted on a spline shaft (146) forming a master output shaft (106) of the gearbox (10).

14. A gearbox (10) according to any preceding claim, which is a transaxle gearbox comprising one or more input shafts (18) operatively connectable, in use, to respective power sources (16), and a pair of output shafts (36, 58) operatively connectable, in use, to respective driving wheels of a vehicle (172), wherein a gear ratio of the input shaft (16) to each of the output shafts (36, 58) is independently adjustable to obtain different wheel speeds for each wheel.

15. The transaxle gearbox (10) of claim 14, comprising an actuator for adjusting the gear ratio, the actuator being operatively connected to a steering angle sensor of the vehicle (172), and comprising a computer operatively connected to an encoder operatively connected to a steering column of the vehicle (172), a vehicle speed sensor and a vehicle accelerometer, wherein the computer is operatively connected to the actuator and wherein the computer is configured to calculate the appropriate actuator setting to obtain wheel speeds matched to different vehicle (172) cornering conditions.

## Patentansprüche

1. Getriebe, umfassend (10): Eine Antriebswelle (16), die eine antreibende Rolle (24) umfasst; eine Abtriebswelle (38), die eine getriebene Rolle (30) umfasst; und ein Paar von Variatorscheiben (12), die zur Kupplung mit entgegengesetzten Seiten der antreibenden (24) und getriebenen (30) Rollen montiert sind; wobei eine oder beide der Antriebs- (10) und Abtriebswellen (38) zur Verschiebung entlang eines Radius der Variatorscheiben (11) montiert sind; **dadurch gekennzeichnet, dass** die Variatorscheiben (12) eine kreisförmige Rille (70) auf beiden Seiten zur Aufnahme eines Satzes von Kugellagern (72) umfassen.

2. Getriebe (10) nach Anspruch 1, bei dem axiale Verschiebung der Antriebs- (10) und/oder Abtriebswellen (38), Kontaktpunkte zwischen den antreibenden (24) und/oder getriebenen (30) Rollen und den Variatorscheiben (12) in verschiedene radiale Positionen relativ zu den Variatorscheiben (12) verschiebt.

3. Getriebe (10) nach Anspruch 1 oder Anspruch 2, wobei die Verschiebung entlang des Radius der Variatorscheiben (12) das Verschieben der antreibenden (24) und/oder getriebenen (30) Rollen entlang eines Liniensegments umfasst, das die Mitte der Variatorscheiben (12) mit irgendeinem Punkt auf, deren Umfang verbindet.

4. Getriebe (10) nach einem vorhergehenden Anspruch, das mehr als eine Antriebswelle (16, 18) und/oder mehr als eine Abtriebswelle (34) umfasst.

5. Getriebe (10) nach einem vorhergehenden Anspruch, wobei die Zahl der Antriebs- (16, 18) oder Abtriebswellen (34) eine ungleiche Zahl ist.

6. Getriebe (10) nach Anspruch 4 oder Anspruch 5, wobei die Vielzahl von Antriebs- (16, 18) und/oder Abtriebswellen (34) gruppiert ist und wobei die Wellen jeder Gruppe zu einer benachbarten Welle der Gruppe in einem Verhältnis von 1:-1 abgestimmt sind.

7. Getriebe nach Anspruch 6, wobei die Gruppen von Antriebs- und/oder Abtriebwellen für axiale Verschiebung im Einklang eingerichtet sind.

8. Getriebe (10) nach einem der Ansprüche 4 bis 7, das eine Master-Antriebs- oder Abtriebswelle (38), (16) umfasst, die auf jeweils eine oder mehrere zusätzliche Antriebs- (18) oder Abtriebswellen (34) abgestimmt (20, 36) ist.

9. Getriebe (10) nach einem vorhergehenden Anspruch, das ferner Mittel (14) zum Vorspannen der Variatorscheiben (12) in Kontakt mit den Antriebs- (24) und Abtriebsrollen (30) umfasst, optional umfassen die Mittel zum Vorspannen (14) eine Feder.

10. Getriebe (10) nach einem vorhergehenden Anspruch, wobei eine oder beide der Antriebs- (24) und Abtriebsrollen (30) axial in eine Position verschiebbar sind, in der Kontaktpunkte zwischen den Rollen (24, 30) und den Variatorscheiben (12) im Wesentlichen mit der Mitte der Variatorscheiben (12) fluchten, und optional wobei die oder jede Variatorscheibe (12) eine Vertiefung oder Durchgangsöffnung (66) an ihrer Mitte umfasst, wobei die Vertiefung oder Durchgangsöffnung (66) optional abgeschrägte oder abgefaste Kante aufweist, die einen glatten Übergang zwischen der Vertiefung oder Durchgangsöffnung (66) und der Fläche (68) der Variatorscheibe (12) bereitstellt.

11. Getriebe (10) nach einem vorhergehenden Anspruch, wobei eine oder beide der Antriebs- (24) und Abtriebsrollen (30) axial in Positionen verschiebbar sind, in welchen sich der Kontaktpunkt zwischen den jeweiligen Rollen (24, 30) und den Variatorscheiben (12) auf der gleichen Seite der Mitte der Variatorscheiben (12) befindet.

12. Getriebe (10) nach einem vorhergehenden Anspruch, das ein Gehäuse (112) umfasst, das einen flüssigkeitsdichten Einschluss für den Variator bildet, wobei das Gehäuse (112) eine Quantität von Traktionsfluid enthält.

13. Getriebe (10) nach einem vorhergehenden Anspruch, das ein Abtriebsrad (144) umfasst, das auf eine der Abtriebswellen (34) abgestimmt ist, wobei das Abtriebsrad (144) verschiebbar auf einer Keilwelle (146) montiert ist, die eine Master-Abtriebswelle (106) des Getriebes (10) bildet.

14. Getriebe (10) nach einem vorhergehenden Anspruch, das ein Transaxle-Getriebe ist, das eine oder mehrere Antriebswellen (18), die sich, in Gebrauch, betriebsfähig mit jeweiligen Kraftquellen (16) verbinden lassen und ein Paar von Abtriebswellen (36, 58) umfasst, die sich, in Gebrauch, betriebsfähig mit jeweiligen Antriebsrädern eines Fahrzeugs (172) verbinden lassen, wobei ein Getriebeverhältnis der Antriebswelle (16) zu jeder der Abtriebswellen (36, 58) unabhängig einstellbar ist, um verschiedene Raddrehzahlen für jedes Rad zu erhalten.

15. Transaxle-Getriebe (10) nach Anspruch 14, das einen Stellantrieb zum Einstellen des Getriebeverhältnisses umfasst, wobei der Stellantrieb betriebsfähig mit einem Lenkwinkelsensor des Fahrzeugs (172) verbunden ist und einen Computer umfasst, der betriebsfähig mit einem Codierer verbunden ist, der betriebsfähig mit einer Lenksäule des Fahrzeugs (172), einem Fahrzeuggeschwindigkeitssensor und einem Fahrzeugbeschleunigungsmesser verbunden ist, wobei der Computer betriebsfähig mit dem Stellantrieb verbunden ist und wobei der Computer ausgelegt ist, die geeignete Stellantriebseinstellung zu berechnen, um Raddrehzahlen zu erhalten, die verschiedenen Kurvenfahrbedingungen des Fahrzeugs (172) angepasst sind.

## Revendications

1. L'invention concerne une boîte de vitesse (10) comprenant : un arbre d'entrée (16) pourvu d'un rouleau d'entraînement (24) ; un arbre de sortie (38) pourvu d'un rouleau entraîné (30) ; et une paire de disques de variateur (12) montés de sorte à venir en contact avec les côtés opposés des rouleaux d'entraînement (24) et entraîné (30) ; l'arbre d'entrée (10) et/ou l'arbre de sortie (38) étant monté(s) pour un déplacement le long du rayon des disques de variateur (11) ; **caractérisé en ce que** les disques de variateur (12) comprennent une rainure circulaire (70) de chaque côté afin d'héberger un jeu de roulements à bille (72).

2. La boîte de vitesse (10) selon la revendication 1, dans laquelle le déplacement axial de l'arbre d'entrée (10) et/ou de sortie (38) déplace les points de contact entre le rouleau d'entraînement (24) et/ou entraîné (30) et les disques de variateur (12) dans des positions radiales différentes en fonction des disques de variateur (12).

3. La boîte de vitesse (10) selon la revendication 1 ou 2, dans laquelle le déplacement le long dudit rayon des disques de variateur (12) comprend le déplacement du rouleau d'entraînement (24) et/ou entraîné (30) le long d'un segment de ligne joignant le centre des disques de variateur (12) à tout point de leur circonférence.

4. La boîte de vitesse (10) selon l'une des revendications précédentes, comprenant plus d'un arbre d'entrée (16, 18) et/ou plus d'un arbre de sortie (34).

5. La boîte de vitesse (10) selon l'une des revendications précédentes, dans laquelle le nombre d'arbres d'entrée (16, 18) ou de sortie (34) est un chiffre impair.

6. La boîte de vitesse (10) selon la revendication 4 ou 5, la pluralité d'arbres d'entrée (16, 18) et/ou de sortie (34) est groupée et dans laquelle les arbres de chaque groupe sont engrenés avec un arbre adjacent du groupe selon un rapport de 1:-1.

7. La boîte de vitesse selon la revendication 6, dans laquelle les groupes d'arbres d'entrée et/ou de sortie sont agencés pour réaliser un déplacement axial à l'unisson.

8. La boîte de vitesse (10) selon l'une des revendications 4 à 7, comprenant un arbre d'entrée (16) ou de sortie (38) maître (20, 36) engrené respectivement avec un ou plusieurs arbres d'entrée (18) ou de sortie (34) supplémentaires.

9. La boîte de vitesse (10) selon l'une des revendications précédentes, comprenant par ailleurs des moyens (14) de sollicitation des disques de variateur (12) pour les forcer à entrer en contact avec les rouleaux d'entrée (24) et de sortie (30), les moyens de sollicitation (14) comprenant optionnellement un ressort.

10. La boîte de vitesse (10) selon l'une des revendications précédentes, dans laquelle l'un des rouleaux d'entrée (24) et de sortie (30), ou les deux, peuvent être déplacés axialement jusqu'à une position dans laquelle les points de contact entre les rouleaux (24, 30) et les disques de variateur (12) s'alignent substantiellement par rapport au centre des disques de variateur (12) et dans laquelle optionnellement le ou chaque disque de variateur (12) comprend une indentation ou ouverture traversante (66) en son centre, l'indentation ou ouverture traversante (66) comprenant optionnellement un bord biseauté ou chanfreiné offrant une transition harmonieuse entre l'indentation ou ouverture traversante (66) et la face (68) du disque de variateur (12).

11. La boîte de vitesse (10) selon l'une des revendications précédentes, dans laquelle le ou les rouleaux d'entrée (24) et de sortie (30) peuvent être déplacés axialement jusqu'à des positions dans lesquelles le point de contact entre les rouleaux (24, 30) respectifs et les disques de variateur (31) sont situés du même côté du centre des disques de variateur (12).

12. La boîte de vitesse (10) selon l'une des revendications précédentes, comprenant un boîtier (112) formant une enceinte étanche pour le variateur, le boîtier (112) contenant une certaine quantité de fluide de traction.

13. La boîte de vitesse (10) selon l'une des revendications précédentes, comprenant un pignon entraîné (144) engrené avec l'un des arbres de sortie (34), le pignon entraîné (144) étant monté de manière coulissante sur un arbre cannelé (146) formant un arbre de sortie maître (106) de la boîte de vitesse (10).

14. Une boîte de vitesse (10) selon l'une des revendications précédentes, constituant une boîte-pont comprenant un ou plusieurs arbres d'entrée (18) pouvant être connectés opérationnellement, lorsqu'ils sont utilisés, à des sources d'alimentation respectives (16), et une paire d'arbres de sorties (36, 58) pouvant être connectés opérationnellement, lorsqu'ils sont utilisés, aux roues d'entraînement respectives d'un véhicule (172), dans laquelle le rapport d'engrenage de l'arbre d'entrée (16) par rapport à chacun des arbres de sortie (36, 58) peut être ajusté indépendamment pour obtenir des vitesses de roue différentes pour chaque roue.

15. La boîte-pont (10) selon la revendication 14, comprenant un actionneur de réglage du rapport d'engrenage, l'actionneur étant connecté opérationnellement à un capteur d'angle de braquage du véhicule (172), et comprenant un ordinateur connecté opérationnellement à un encodeur connecté opérationnellement à une colonne de direction du véhicule (172), un détecteur de vitesse du véhicule et un accéléromètre du véhicule, dans laquelle l'ordinateur est connecté opérationnellement à l'actionneur et dans laquelle l'ordinateur est configuré pour calculer la configuration appropriée de l'actionneur pour obtenir des vitesses de roue adaptées aux différentes conditions de braquage du véhicule (172).
